**Europäisches Patentamt**

**European Patent Office**

**Office européen des brevets**

(19)

(11) Publication number : **0 584 019 A2**

(12) # EUROPEAN PATENT APPLICATION

(21) Application number : **93402070.2**

(22) Date of filing : **18.08.93**

(51) Int. Cl.⁵ : **H04N 1/46**

(30) Priority : **19.08.92 US 932087**

(43) Date of publication of application :
**23.02.94 Bulletin 94/08**

(84) Designated Contracting States :
**DE FR GB IT**

(71) Applicant : **MINNESOTA MINING AND MANUFACTURING COMPANY**
**3M Center, P.O. Box 33427**
**St. Paul, Minnesota 55133-3427 (US)**

(72) Inventor : **Fisch, Richard S., c/o Minnesota Mining and**
**Manufact. Co., 2501 Hudson Road, P.O. Box 33427**
**St. Paul, Minnesota 55133-3427 (US)**
Inventor : **Larshus, David A., c/o Minnesota Mining and**
**Manufact. Co., 2501 Hudson Road, P.O. Box 33427**
**St. Paul, Minnesota 55133-3427 (US)**

(74) Representative : **Warcoin, Jacques et al**
**Cabinet Régimbeau 26, avenue Kléber**
**F-75116 Paris (FR)**

(54) **Color matching with digital electronic files.**

(57) A method for using a source of electronic data to produce a first image on a first imaging system from that electronic data, the method comprising :

a. providing to a computer which drives a first imaging system a first electronic look-up table for a first imaging media to be used on said first imaging system, said first look-up table relating the spectral photometric properties of said first media on said first imaging system to the spectral photometric properties of a second imaging media on a second imaging system,

b. comparing the first look-up table for said first media to a second look-up table which relates the spectral photometric properties of the second media on a said second imaging system to the color output of a third imaging system, and

c. creating a third look-up table for said first media for use in generating an image by altering the first look-up table for said first media so that hardcopy output of said first media from said electronic data on said first imaging system will more closely correspond to the color output of said third imaging system from said electronic data, and

d. generating a first image on said first imaging media, using said third look-up table to produce an image approximating an image produced from said electronic data on said third imaging system.

This method is particularly useful in proofing systems and where said first imaging media is a thermal transfer media.

EP 0 584 019 A2

## Field of The Invention

The present invention relates to the graphics art field, particularly the color proofing field, and more particularly to a method for creating a first set of color image data (or first color image) which has been corrected for use with a first specific printer (or other color imaging system) so that a second set of image data will produce the same color characteristics as the first printer when the second set of image data is printed by a second printer (or second color imaging system) which is different from the first specific printer.

## Background of the Invention

Color printing systems seek to reproduce the broad range of colors present in natural scenes or synthetic (i.e., computer-generated) images using typically only three or four colorants (pigments, dyes, etc.) which are inherently less than ideal in their absorption characteristics. The necessity of working with non-ideal colorants not only limits the range of colors that may be reproduced, but requires careful compensation or "color correction" to be applied so that the printed colors are the best possible match to those of the original artwork. Intentional distortions or modifications of the image characteristics may be made to accommodate the gamut of a specific printer, or for the purpose of "subjective improvements" in the final appearance of the print. This color correction is usually done as part of the process of converting the red-green-blue signals (hereinafter RGB) that measure the color of the original to yellow-magenta-cyan-black signals (hereinafter YMCK) that control the amounts of colorants used in a print. The complexity and approximations involved in the color correction process coupled with the fact that the reproduction will in general always differ from the original due to color gamut limitations makes it extremely desirable to preview or "proof" the color print by some means before committing to the time and expense of generating printing plates for a press run.

Current proofing methods involve either (1) the traditional time-consuming, labor-intensive process of generating films which would normally be used to expose printing plates and using those films to also expose special photosensitive materials which are then overlayed and registered by hand, (2) the use of expensive specialized automated proofing devices, or (3) the use of relatively inexpensive color thermal printers that usually provide only a rough approximation of the colors that will appear in the final printed image. It would be desirable to be able to produce a color proof on an inexpensive printer that would provide an accurate preview of the output from a different, typically more expensive and less accessible printer.

It is common practice in modern color correction techniques to "pre-solve" sets of RGB to YMCK conversions for specific imaging devices, store these solutions in a small look-up-table, and then apply interpolation to correct for arbitrary colors. In most cases, the initial solutions are based on an analytic model of printed colors (i.e., the "Neugebauer equations," or some modification thereof). The weakness in these methods is in the inaccuracy of the analytic model's prediction of the real printing process due to nonlinearities and interactions between the various inks used.

Newer proofing systems have attempted to use thermal transfer media to generate proofing images from electronic data. The thermal transfer means that have been tried include both thermal mass transfer and thermal dye transfer. These types of processes theoretically offer a number of advantages over other types of proofing systems, particularly in speed, cost and ease of use.

In such proofing systems, a fully coated panel, ribbon or sheet of up to eight different colors (although four colors is still the standard) on a substrate is placed in contact with an imagewise heatable element (on the backside of the sheet) and a receptor sheet (in contact with the color donating surface of the color-bearing sheet. The heat is applied to the backside of the sheet by appropriate means (e.g., thermal heads, lasers, etc.) and the localized application of the heat causes transfer of the colorant (as a dye or as a dye/pigment in a binder) to a receptor sheet.

References to such printers include U.S. Patent Application Serial no. 07/752,770 in the name of Fisch, Larshus and Jongewaard as well as S. Masuda, N. Kihara, and O. Majima "Color Video Printer" IEEE Transaction of Consumer Electronics, CE-28 (3) pp. 226 (1982) and N. Taguchi, T. Shimizu, A. Imai, S. Hotta, S. Mina, and H. Irie "Dye Transfer Type Thermal Printing Sheets" Proceedings of the 14th Joint Conference on Image Technology. These systems are not without their difficulties.

The thermal head used in these printers is expensive to make and replacement costs both for labor and parts are high. The heads in such printers are driven by a Read Only Memory (ROM) chip built into the printer. As the thermal head ages, its ability to effect a uniform electronic heat profile across the 300 plus wires per inch in the head deteriorates. The ability to precision coat dye layers across the doner sheet width also compounds the error since each roll lot may differ. The complexity of producing 4 different spatially separate colors on a single doner sheet with good repetition for at least 100 images (400 color panels) is difficult. Changes in dye quantity or the color of the dyes themselves often cause differences between lots of doner ribbon from ribbon roll to ribbon roll. A condition called back transfer commonly exists in such printers. Back transfer is characterized by the color transfer of a first color back to the doner sheet when the doner sheet is being energized to deposit a second color. For optimum repeatability such differences require hands-on correction by the user. Since these users generally work in such diverse shops or offices vendors find it uneconomical to send factory representatives to manually correct the final color output to a standard color condition.

The techniques used for such electronic output proofs as used in copying (printer) devices do not deliver color representations indicative of the final image as reproduced with a conventional off press proof or by means of ink on paper. To be a viable proof, the colors reproduced must be a visual match to either the ink on paper final image or an off press proofing system which is the industry standard.

The most complex problem encountered in these systems to date has been the inconsistency in the donor media. It has been impossible to produce specific proofs from available thermal transfer media, especially thermal dye transfer media, because the media varies from lot to lot and even roll to roll within a lot of manufactured donor media. In view of the necessity for predictability in the proofing images, this inconsistency has been a fatal defect in some commercial systems. Some thermal dye transfer systems have been withdrawn from the market because of their inability to overcome this problem. Even with the most painstakingly generated look-up tables, both mechanical and electronic, thermal dye transfer proofing systems have failed to achieve a high degree of reliability.

In electronic imaging, such changes can be implemented by changing printing parameters. The installation of the relevant changes is sometimes time consuming and perhaps beyond the capability of the device user. A technique whereby the changes are implemented with minimum user intervention is quite desirable. Such changes may be so number intensive that slight differences in the information render the device or the productive capacity of the device commercially useless. Especially in the Graphic Arts field, because of the variety of print processes in use and the multiple of standards used, as well as the innate differences between raw materials (ink and paper), aim points needed to match a printer to a proofer or the proofer output to the press conditions are difficult to provide. The same press type replicated in the same location can produce different results even with the same raw materials.

U.S. Patent 3,612,753 to Nathaniel Korman describes a method for producing color pictures wherein the color characteristics of the reproduction match that of the original picture. This is done by printing a test pattern sampling the color space of a particular output device (but only Yellow, Magenta, and Cyan combinations - the Black separation is generated by a Gray Component Replacement calculation), measuring the tristimulus values for each patch, and constructing a table based on the first two terms of a Taylor series expansion in the vicinity of the test colors (effectively linear interpolation). The test pattern consisted of only 512 patches (8 shades each of Yellow, Magenta, and Cyan). The combination of the small number of test patches, the simple linear interpolation, and the calculated black results in a color conversion which is not sufficiently accurate for present day commercial, high-quality printing standards.

Empirical approaches have been proposed or tried where the analytic model is replaced by direct measurement of a large number of test patches to characterize a particular combination of ink/paper/press conditions. See, for example, "Proposal for an Empirical Approach to Color Reproduction," by Warren Rhodes, Color Research and Application, Vol. 3, No. 4, winter 1978, pp. 197-201, proposing that $2\times10^7$ points be scanned in order to convert a set of RGB (tristimulus) pixel values to a suitable set of YMCK halftone dot percentages. However, the measurement of such a large number of points is presently impractical.

While colors can be described in a standardized way, each display or hard copy output device requires its own calibration and compensation to correct for nonlinear behavior and other nonideal characteristics. It would be desirable to have a means for the translation of color image data intended for one printing system into a form that results in the same color appearance when printed on a different system. Such a translation would have to take into account all printer properties automatically to provide a simple, direct translation between devices.

U.S. Patent Application Serial No. 07/862,346, filed on April 2, 1992 in the name of Richard Rylander et al., and titled "Color Correction with a Four-Dimensional Look-up Table" describes a method for operating a computer to generate a look-up table of stored data to translate a first set of digital information defining a color image corrected for a first printing system into a second set of digital information for a second printing system, for the purpose of generating an image on the second printing system which approximates the color characteristics of an image created on the first printing system. This method includes the steps of:

    a. generating data for a first test pattern of color patches to sample the output of a first printing system;

    b. generating data for a second test pattern of color patches to sample the output of a second printing system;

    c. printing the first and second test patterns of color patches as a function of the first and second test pattern data;

    d. measuring the color values of the color patches of the first and second color patterns to generate a first and second four-dimensional array of measurement data;

e. expanding the first and second arrays of measurement data to create first and second coarse, four-dimensional databases;

f. searching for a point in the second coarse database for which the color difference between that point and a corresponding point in the first coarse database is minimized; and

g. repeating step f for each point in the first database to generate a look-up table.

In one embodiment of that invention, step e is accomplished by separately performing a nonlinear interpolation on both arrays of measurement data. In another embodiment, step f is accomplished by constraining the search in the second database to a neighborhood around the point with the same YMCK indices as the point in the first database. The method preferably includes the step, after step f, of performing a linear interpolation within the second coarse database to estimate a point in the second printing system's fine color space for which the color difference between that point and a corresponding point in the first coarse database is minimized. The method preferably also includes the step of applying a computer implemented four-dimensional low-pass filter to the set of points generated in step g.

The samplings of steps a and b are preferably nonuniform, emphasizing the more visually important regions of color space. In one embodiment of the invention, six samples of each color (at color densities corresponding to halftone dot percentages of about 0%, 6%, 18%, 44%, 69%, and 100%) are used to form a 6x6x6x6 matrix (containing a total of 1,296 color patches), and the first and second coarse four-dimensional databases are 17x17x17x17 matrices.

Another embodiment of that invention includes a method of operating a computer to use the look-up table generated by the method recited above to translate a first set of digital information defining a color image corrected for a first printing system into a second set of digital information for a second printing system, for the purpose of generating an image on the second printing system which approximates the color characteristics of an image generated on the first printing system. This method preferably includes the steps of:

1. picking a predetermined solution from the table which is closest to the actual YMCK value of a datapoint in the first set of digital information;

2. applying linear interpolation between the coarse color data points of the table to arrive at the best YMCK solution in fine color space; and

3. repeating steps 1 and 2 for each point in the first set of digital information.

This type of system was not contemplated for use or disclosed as useful in the practice of the present invention.

## SUMMARY OF THE INVENTION

The present invention describes a method for using a source of electronic data (of an image) to produce a first image on a first imaging system from said electronic data, said method comprising: a) providing to a computer which drives a first imaging system (e.g., a laser imager, laser diode imager, thermal printer, or any other imager, preferably a digital imager) a first electronic look-up table for a first media to be used on said first imaging system, said first look-up table relating the spectral photometric properties of said first media on said first imaging system to the spectral photometric properties of a second media on a second imaging system (e.g., which may be the same or similar to the first imaging media and system, or may be totally different, or may be an artificial or fictitious reference system), b) comparing the first look-up table for said first media to a second look-up table which relates the spectral photometric properties of the second media on said second imaging system to the image output (e.g., three or four color image output, which could be for a third imaging medium) of a third imaging system (which may be the same as, similar to, or different from said first and second imaging systems, and may for example be a printing press), and c) creating a third look-up table for said first media on said first imaging system for use in generating an image on said first imaging system by altering data in the first look-up table for said first media (or correspondingly altering the data for the second or third imaging system) so that the hardcopy output of said first media on said first imaging system from said electronic data will more closely correspond to the color output of said third imaging system from said electronic data. This system mat operate to combine the first and second look-up tables to generate a third look-up table which will then direct image formation in said first and/or third imaging system.

The present invention describes a process for amending existing look-up table or calibration tables (e.g., for color or tone) in an existing computer file to accommodate differences in samples or lots of color donating elements provided to a computer driven hard copy imager (e.g., a thermal transfer pre-press color proofing system). In a preferred embodiment the means for amending the existing look-up table is provided on a storage medium (e.g., floppy disk) along with the color donating element (e.g., the disk is provided in or on a box of thermal transfer sheets or ribbon). By loading the disk on to the computer, a look-up table specific to that sample or lot is loaded on to the computer. The process of this invention allows a facile adjustment to update a look up table (LUT) describing each of these circumstances to the other with accuracy in real time using systems such as those previously described.

The invention uses storage media that can be recorded, read, and erased many times (e.g., magnetic, optical/magnetic systems) to seamlessly transfer to a computer electronic data describing color and tone information from a single lot of color proofing material such (as heat transfer color ribbon, most specifically by dye sublimation means), and thereby to a color proofer driven by a computer enabling the color proofer to implement the output characteristics of said printer to color and tone match specific color targets of a different color and tone element, composition, or imaging system. Said storage media may be included within the box containing the color imaging media (materials). The data communicated by said storage media is obtained by an electronic data look-up table.

An electronic data look-up or correction table is provided for a specific printer for use with a single type of hardcopy output media. The table relates the spectral photometric curve of a first media to a standard table, that standard table being for another media or differently sensitive media of the same type on a first color imaging system. The standard table relates the spectral photometric properties of a second media (real or artificial) for use in the specific first imaging system (which may be any type of color imaging system, but most importantly in the practice of the present invention a thermal transfer imaging system and most importantly a thermal dye transfer imaging system) to the spectral photometric properties of a second output imaging system (e.g., printing press). The correction table is provided to a computer driving or controlling the first imaging system. The computer compares the information on the spectral photometric properties of the first media with the spectral photometric properties of the second media, and then converts the correction table on the first media so that its color output will match the spectral photometric properties of media in the second output imaging media system. As the second output media system is usually consistent in its spectral photometric properties and sensitometry (e.g., as with a printing plate), this single conversion will enable the first imaging system to generate faithful renditions of any image data. The faithfulness of the data will be in relationship to the rendition to be generated on the second imaging system.

Any method of generating an accurate look-up table for the first media with respect to the first color imaging system is useful. The same holds true with respect to generating correction tables between the first media and the second media on the first printing system and the second media on the first printing system to the output of the second imaging system. The preferred method for generating look-up tables would be as follows. Modern digital printing systems quantize images both spatially and tonally. A two-dimensional image is represented by an array of discrete picture elements or "pixels," and the color of each pixel is in turn represented by a plurality of discrete tone or shade values (usually an integer between 0 and 255) which correspond to the color components of the pixel: either a set of red, green, and blue (RGB) values (as an image is measured), or a set of yellow, magenta, cyan, and black (YMCK) values that will be used to control the amount of ink used by a printer to best approximate the measured color. Thus, a color image, which is comprised of a large number of pixels, may be stored in a computer as a set of data points.

However, a set of data points which has been prepared for one printing system cannot necessarily be used on a different printing system. This is because every printing system requires its own calibration to correct for nonlinear behavior and other nonideal characteristics. Each printing system uses its own particular combination of ink, paper, and press conditions. Therefore, if the same set of data points prepared for a first printing system were simply fed to a second printing system, the image produced.by that second system would not closely resemble the image that would be created if that same set of data were fed to the first printing system. Thus, it is necessary to convert the set of data points which represents the first set of halftone dot percentages on the first printer into a second set of data points which represents that same set of color intensities on the second printer. The present invention accomplishes this by generating a four-dimensional matrix, or "look-up table," for converting the first set of data points on the first printing system into a second set of data points for the second printing system. The look-up table has four dimensions because each pixel has four characteristics : a certain amount of yellow, a certain amount of magenta, a certain amount of cyan, and a certain amount of black.

In order to generate this four-dimensional look-up table, it is necessary to select a set of data points having known amounts of each of the four colors and print a test pattern of color patches corresponding to the data points. The goal is to be able to print an image on a new or target "output" printer which will closely resemble the image printed by the standard printer. Typically, the standard printer output will be some proofing system such as the 3M Matchprint™ proofing system and the target output printer will be a continuous-tone, thermal-dye diffusion printer.

A system for generating such a table preferably comprises a computer generating a set of points representative of the range of color shades and intensities available in the YMCK color spectrum. This range is also known as "four-dimensional color space". This data is communicated to two printers, which print respective test patterns of color patches. The color characteristics of the color patches in both test patterns are then measured by an appropriate device, (eg., a color spectrophotometer). The measurement data from test patterns is fed into computer, which generates a look-up table for converting data for use with a printer into data for use with another printer.

One way to sample the printed output of each system would be by printing one color patch for every known combination of varying intensity levels for the four colors. However, this is impractical because each of the four colors may be divided into 256 shades, ranging from white (no color) to the most intense presence of that color, and the various shades of each color may be varied independently. Thus, in order to sample the entire range of possible color variations (ie., the entire "fine color space") of each printer, it would be necessary to print $(256)^4 = 4.3 \times 10^8$ color patches on both printers. The color characteristics of each of the $8.6 \times 10^8$ patches would then have to be measured. Such a mechanism for generating a look-up table is impractical because of the $8.6 \times 10^8$ measurements required.

The number of samples taken may be reduced by subdividing the color space of each color into a less precise or coarser number of samples such as 17 different levels of intensity instead of 256. This "coarse" four-dimensional matrix provides a 16x16x16x16 partitioning of four-dimensional color space (i.e., an array of 17x17x17x17 samples). While such an array is much smaller than the $4.3 \times 10^8$ color patches required for the 256x256x256x256 matrix, the $17^4 = 83,521$ color patches required is still an inconvenient number to print and measure.

The size of the test pattern matrix may be decreased still further by selecting six particular levels of density for each color out of the 17 levels possible. This 6x6x6x6 matrix would require the printing and measurement of $6^4 = 1,296$ color patches, which is practical for hand measurements, if necessary.

The sampling of the color intensities should be nonuniform in order to concentrate on the visually important regions of color space without requiring an excessive number of individual color patches in the test pattern. More emphasis should be placed on bright highlights to better estimate the nonlinear regions of color space. Color densities corresponding to halftone dot percentages of 0%, 6.25%, 18.75%, 43.75%, 68.75%, and 100% for each of the four colors work well. (The color densities used for each of the colors in a test patch are based on multiples of 6.25%, corresponding to the sixteen coarse steps from no color to maximum color density).

The small number of shades (6) used in the actual test pattern do not necessarily have to be chosen "out of" the 17 levels possible. Any number of shades, regardless of their distribution, may be interpolated by the disclosed four-dimensional cubic spline process to generate the 17 equally spaced levels of color intensity.

This method for generating a look-up table for translating a first set of digital information for a standard printer (printer 1) to a second set of digital information for a target printer (printer 2) will now be described.

First, data is generated by a computer to instruct a printer to print a test pattern which samples its printing range of color shades and intensities, ie. its four-dimensional color space. This is done by first subdividing the color space of the printer into 17 equally spaced levels of color density for each of the four colors: yellow, magenta, cyan, and black (YMCK), and then generating a 6x6x6x6 matrix which is formed by selecting 6 levels from the 17 levels of coarse color space for each of the four colors. Similarly, a second set of data is generated by the computer for printer 2.

Next, the test pattern of color patches is printed on printer 1. A second test pattern is printed on printer 2.

The color patches from printer 1 are then measured to determine their color characteristics. A color may be characterized by its lightness, saturation, and hue. One commonly used color measurement system is the CIELAB L*a*b* system. In the L*a*b* system, the "L" represents the lightness of the color, the "a" represents the location of the color on a spectrum from red to green, and the "b" represents the location of the color on a spectrum from yellow to blue. The "a" and the "b" value, taken together, represent the saturation and hue of the color.

One advantage of using the L*a*b* measurement system is that it provides a simple means for calculating the "difference" or "similarity" of two different colors in absolute terms. While this absolute value does not reflect in what manner two colors differ, it does reflect how far apart they are in color appearance. This latter characteristic is useful in carrying out the present invention, as will be discussed later. The same measurements are then carried out on the color patches printed by printer 2.

The color characteristics measurements for each color patch are then fed into a computer. The computer then expands the nonuniform 6x6x6x6 matrix into a uniform 17x17x17x17 matrix of coarse color space. This is done by applying a four-dimensional version of a cubic spline interpolation, ie. a "curve" of best fit in four-dimensional space, to the 6x6x6x6 matrix. This interpolation converts the nonuniform 6x6x6x6 sample spacing into a uniform 17x17x17x17 matrix, and preserves most of the nonlinearities of the actual print process. A similar nonlinear interpolation is applied to the data from the measurements taken on the color patches from printer 2. Thus, a four-dimensional YMCK database of $17^4 = 83,521$ L*a*b* values is generated for each printer.

The next step involves finding a point in the second printer's 17x17x17x17 database of L*a*b* values which most closely corresponds to a particular point in the first printer's 17x17x17x17 database of L*a*b* values. This step is repeated for every point in the database of printer 1.

The L*a*b* value in the second printer's database which most closely corresponds to a L*a*b* value in the first printer's database is that L*a*b* value in the second printer's database for which the difference in color characteristics between the two L*a*b* values is minimized. The difference between two colors, ΔE, is defined in the L*a*b* system as the square root of the sum of the squares of the differences between the L, a, and b values for each point:

$$\Delta E = \sqrt{\Delta L^2 + \Delta a^2 + \Delta b^2}$$

The initial coarse match search is made more efficient by assuming that a datapoint in the database of printer 2 having a given color density of yellow, magenta, cyan, and black has a L*a*b* value which is reasonably close to a data point having that same level of color density in the database of printer 1. This assumption allows the computer to restrict its search to minimize ΔE to a small neighborhood within the second printer's database around the data point which corresponds to the data point in the first printer's database. This search constraint has the added benefit of preserving much of the GCR (Gray Component Replacement) character of the original YMCK "solution." Since color differences were determined by three-component metric L*a*b* measurements, the "redundant Black" ink cannot be determined without some artificial constraint. Restricting the search neighborhood ensures that an equivalent amount of three-color neutral will not be replaced by black alone (or vice versa) in a color match found within that limited search neighborhood.

The neighborhood searched in the second printer's database may be constrained to about four coarse levels above and five below the data point in printer 1 for which a match is sought. Thus, for example, for a yellow color intensity of 7 on the coarse color scale of color density ranging from 0 for no color to 16 for maximum color density (0 through 16 representing the 17 points in the 17x17x17x17 matrix), the neighborhood searched in the second printer's database would be constrained to a range of about 2 to 11 for the color yellow. A similar range would apply for magenta and cyan.

Of course the size of the neighborhood is constrained by the boundaries of the matrix itself. Thus, for a color intensity level of 2, the range would not be from -3 to 6, because -3 does not exist in the 17x17x17x17 matrix. Instead, the range would be 0 to 6. The search neighborhood in the second printer's database for black may be constrained to two levels above and below the color density of a given point in the first printer's database for which a match is sought.

Thus, the search neighborhood occupies a four-dimensional color space of no more than about 9x9x9x4, or 2,916 points, which is much smaller than the $17^4$=83,521 available points in the 17x17x17x17 coarse color matrix. This decreases the time required for the computer to find a coarse match in the second printer's database for every point in the first printer's database.

Once this "coarse" match has been found, the local four-dimensional space surrounding the point in the second printer's database corresponding to the point in the first printer's database is expanded by linear interpolation to estimate the "best-match" point in the second printer's database. A region of four-dimensional space is also known as a hypervolume or hyperspace. In the same way that one may make a linear interpolation between points on a two-dimensional area, one may interpolate between points in a three-dimensional space, or points in a four-dimensional hyperspace. This linear interpolation is necessary because the 17x17x17x17 matrix accounts for only 16 coarse spaces of color for each of the four colors. Because there are actually 256 different fine sublevels of color intensity for each of the four colors, there are 16 sublevels of color intensity for each of the 16 coarse color spaces. The linear interpolation thus involves determining which sublevel in the second printer's fine color matrix corresponds to a point in the first printer's coarse color matrix having a given L*a*b* value.

The computer does this in the following way. Computers store information in a series of bits, each of which may be represented by a "0" or a "1." Because there are two possible representations for each bit, and because there are 256 possible sublevels of color intensity for each color, eight bits are needed to represent each of the YMCK values ($2^8$ = 256). The four most significant bits (i.e., the four leftmost bits) of the eight bits represent the sixteen levels of coarse space which define the 16x16x16x16 divided color space, which defines the coarse 17x17x17x17 matrix. The four least significant bits (i.e., the four right-most bits) of the eight bits represent the sixteen sublevels of color space which lie between each coarse level. The four least significant bits are used to estimate the best match in the second printer's fine color space which most closely matches the color space of the first printer by performing a linear interpolation between the L*a*b* values in the second printer's database. This four-dimensional interpolation within the second printer's database ensures that there will be no abrupt color changes between partitions of YMCK color space.

Repetition of the above steps of: (1) minimizing ΔE for each point within coarse color space, and (2) then linearly interpolating the best match within that hypervolume, for every point in the first printer's database creates an initial look-up table.

The initial look-up table is then passed through a computer implemented four-dimensional filter with "cubic notch" kernel characteristics. This minimizes the effects of errors in the measurement data and ensures smooth color-to-color transitions.

The final look-up table thus created is a 17x17x17x17 matrix of coarse color space for translating a first set of data points defining a color image corrected for printer 1 into a second set of data points defining a set of data points for printer 2. A computer uses look-up table to look up the predetermined solution from the table which is closest to the YMCK value of a particular data point in the first set of digital information. The computer then applies a linear interpolation between the coarse color data points of the table to arrive at the best YMCK solution in fine color space. This process is repeated for every data point in the first set of digital information.

The 6x6x6x6 nonuniform sample array described above may be substituted with a smaller 5x5x5x5 array. Color densities of 0%, 12.5%, 37.5%, 62.5%, and 100% may be used for each of the four colors. While such an array has the advantage of being smaller than the 6x6x6x6 array ($5^4$ = 625 combinations instead of $6^4$ = 1,296), the effects of measurement errors and local printer anomalies are much more significant. These errors are then more likely to result in noticeable color differences between images printed by the two devices.

It should be noted that the measurement data bases for the two printers need not be derived from identically sized arrays. For example, if there is greater uniformity and less nonlinearity in printer 1, then a look-up table may be generated by using a 5x5x5x5 matrix with printer 1, while using a 6x6x6x6 matrix for printer 2.

The system contains as a minimum a computer, proofer, and storage drive mechanism. The disk (storage media) contains, but is not limited to, informational text and optional graphics provided to educate, instruct, train the user in aspects of printing and proofing, provide commercial information concerning new products or company information, code numbers identifying the lot of color ribbon in said box, software to allow color changes initiated by the computer to allow the printer output of a specific mixture of the (3 or more) colors of said ribbon to match each of the individual 4 or more colors specified as desired by international standards, trade association standards, specific printing presses with custom or unidentified colors, or other proof materials. In the practice of this invention, software automatically installs the required color information as specific look up tables (LUT) per color or combination of colors per printing or proofing set identified. Information may be on said disk concerning the machines in that same location that have previously used this disk.

Other tables (color difference or LUT) may already exist in the computer memory. The origin of such look up tables may be diverse such as, for example, from the aforesaid U.S. Patent 3,612,753, directly from a color scanning device using the method of Hoffrichter and Jung as described in U.S. Patent 4,623,973, from a scanning device for off press measurements such as described by Mason "Specification and Control of Process Color Images by Direct Colorimetric Measurement" as described in TAGA (The Technical Association of the Graphic Arts) 1985 Proceedings pgs. 526-546, or from a printing press containing an integral real time color analysis system (with or without closed loop feed back to the devices used to apply the ink onto a printing web). This includes the control rationale described in "Control Strategies of Digital Reproduction with a View to Print Quality" by Saarema and Oittinen in TAGA (The Technical Association of the Graphic Arts) 1983 Proceedings pgs. 642-667, when using printing press mounted color measuring devices using spectrophotometry as described by Celio "Spectrophotometric Instrumentation for Graphic Arts in TAGA (The Technical Association of the Graphic Arts) 1988 Proceedings pgs. 583-603, and by Celio and Brand "On-Press Colorimetric Control for Gravure Publication and Packaging Presses" in the Proceedings of the Gravure Association of America Conference Proceedings March, 1988, or the optical densitometer analog of such devices as described by Simomaa and Kaivoso in TAGA (The Technical Association of the Graphic Arts) 1985 Proceedings pgs. 428-463.

This invention allows searching of existing storage tables, by, for example, lot numbers or full look up table, table installation date, ribbon identification number, final proof usage number (offset, commercial or publication, Gravure, Flexography et al., specific ink sets used, commercial or custom colors, tone reproduction needed, etc.) to assist in color image matching to allow for comparison and a decision to replace said former data. If the data communicated provides no redundancy, automatic substitution is accomplished. If the data communicated appears to be a duplication of the data a decision maybe made on a comparison of ribbon lot number and installation dates (lot number priority). The substitution of one look up table for an already existing one is automatically accomplished. If the lot numbers match the date of installation as well as the type of table is compared, e.g., date and printing process(e.g., Gravure), or press location and printing type press 5, offset publication, Flint ink set 12 and date, finding a match in which all parameters match except date or ink set allows LUT substitution. Other restraints can be imposed depending on the printing or proofing and press conditions.

1. Relevant disk is installed in computer storage drive.

2. For a typical computer used in desk top publishing the action of disk installation:

    a. Signals the presence of the storage media (e.g., disk).

    b. Starts the drive motor.

    c. Allows the reading mechanism of the drive to be activated.

    d. Allows searching of the storage media.

    e. Provides identification of the individual tracks.

    f. Provides communication of that information (**title** et al.) to a self-luminous device for visual assessment.

    g. Provides information that computers in this location have already used this disk.

The only operator intervention would be to provide the means for the computer to initiate an automatic installation.

Example 1

1. Disk is prepared with the following information:

    a. Greeting

    b. Date

    c. Product Information . . . Availability sizes, prices for 3M Brand Rainbow™ Doner Ribbon and Receptor Print Media.

    d. Rainbow™ Doner Ribbon Lot Number.

    e. Final Color Target . . . Offset, Publication Printing, S.W.O.P. Standards (SWOP is a trademark of the SWOP, Inc., a Trade Standards Association for Web Publication Printing, NYC, NY).

    f. Look Up Table for converting Rainbow colors to SWOP colors, designated for this example as Lot #4657.

    This disk is enclosed into a box containing 3M Brand Rainbow™ Doner Ribbon Lot #4657 at a 3M Factory.

    When delivered to a user, the box is opened, the disk retrieved and placed into an Apple Macintosh Brand Computer (or to another format of computer, e.g., IBM) with an Apple Color Monitor. A 3M Brand Rainbow™ Thermal Printer is connected to the Macintosh.

    The colors of the inks used on the Rainbow Ribbon lot #4657 are not the same as those specified for S.W.O.P. inks or their overprints.

    Already stored on the computer are various LUT which exist for diverse ink color sets (S.W.O.P., GAA-Gravure Association of America Type 6, SNAP, etc.). Color and tone reproduction data representing best results communicated from International Standards, e.g., ISO TC130 WG3, Trade Associations, e.g., S.W.O.P., for specific printing processes, e.g., Web Offset Publication Printing, Sheet Fed. Letterpress, etc., or individual printing shop internal standards may be included in these LUT's or exist as separate information. LUT Information on custom blended inks or colors such as those in corporate logos may also be included.

    Aim points for each press destined to be used for printing at the location and the optimum aim points for a press for a particular job are also included. LUT's or other information regarding color and tone may also exist on the various types of press and off press proofing systems employed, e.g., 3M Matchprint™ or 3M Digital Matchprint™.

    The disk is inserted into the computer and an ICON is seen on the screen. The computer operator "drags" or places the ICON in the applications file of the Macintosh. The action initiated by the insertion of the disk into the application program is as follows:

    1. A greeting automatically appears on the Monitor screen.

    2. A search program is initiated that allows the lot number, roll number and date of previous installation of the ribbon associated with the disk to be compared with previous recorded data on those parameters already stored in the computer.

    3. If the computer recognizes that it has already used said disk, e.g., date, ribbon lot, and machine number processes agree, then no action is taken and the computer operator is offered an option of a training program order sheet and or a mandatory commercial.

    4. If the lot numbers are the same, then the date values are compared.

    5. If the date values are different then:

        a. The computer searches the disk file for information regarding the different color set processes or presses that might be affected by data from said disk. The color LUT stored on the disk replaces that previously stored in the computer.

        b. Once the corresponding relevant LUT's or other information in the case of this example S.W.O.P. Web Offset Publication is located in the computer file, it is automatically replaced by the updated information from the disk.

    6. If both lot and date values are different then:

        a. Action 4A is repeated.

        b. If no LUT's exist regarding the different color sets or processes or presses that might be affected by data from said disk, the color LUT stored on the disk is stored in the computer for future use.

    7. Optionally, while this sequence continues, a training program can be efficiently occupying the computer operator's attention. At the end of said program the disk is ejected and the new files saved.

    8. The disk is ejected for use on another machine or for reuse as a storage media for other operations (e.g., word processing).

## Claims

1. A method for using a source of electronic data to produce a first image on a first imaging system from said electronic data said method comprising:

a. providing to a computer which drives a first imaging system a first electronic look-up table for a first imaging media to be used on said first imaging system, said first look-up table relating the spectral photometric properties of said first media on said first imaging system to the spectral photometric properties of a second imaging media on a second imaging system,

b. comparing the first look-up table for said first media to a second look-up table which relates the spectral photometric properties of the second media on a said second imaging system to the color output of a third imaging system, and

c. creating a third look-up table for said first media for use in generating an image by altering the first look-up table for said first media so that hardcopy output of said first media from said electronic data on said first imaging system will more closely correspond to the color output of said third imaging system from said electronic data, and

d. generating a first image on said first imaging media, using said third look-up table to produce an image approximating an image produced from said electronic data on said third imaging system.

2. The method of claim 1 wherein said first imaging media is a thermal transfer media.

3. The method of claim 2 wherein said media is a thermal dye transfer media.

4. The method of claims 1, 2 or 3 wherein said third imaging system is a printing press.

5. The method of claim 4 wherein said first and second media comprise thermal transfer media.

6. The method of claim 1 wherein either said first look-up table or said second look-up table is generated to translate a first set of digital information defining a color image corrected for a first imaging system into a second set of digital information for a second imaging system, for the purpose of generating an image on the second imaging system which approximates the color characteristics of an image created on the first imaging system, including the steps of:

a. generating data for a first test pattern of col-

or patches to sample the output of a first imaging system;

b. generating data for a second test pattern of color patches to sample the output of a second imaging system;

c. printing the first and second test patterns of color patches as a function of the first and second test pattern data;

d. measuring the color values of the color patches of the first and second color patterns to generate a first and second four-dimensional array of measurement data;

e. expanding the first and second arrays of measurement data to create first and second coarse, four-dimensional databases;

f. searching for a point in the second coarse database for which the color difference between that point and a corresponding point in the first coarse database is minimized; and

g. repeating step f for each point in the first database to generate a look-up table.

7. The method recited in claim 6, wherein step f is accomplished by constraining the search in the second database to a neighborhood around the point with the same color indices as the point in the first database.

8. The method recited of claim 6, wherein the second imaging system has a fine color space, and further including the step, after step f, of performing a linear interpolation within the second coarse database to estimate a point in the second imaging system's fine color space for which the color difference between that point and a corresponding point in the first coarse database is minimized.

9. The method recited in claim 6 wherein the samplings of steps a and b are nonuniform, and wherein the nonuniform samplings include taking six samples of each color to form a 6x6x6x6 matrix, and wherein the first and second coarse, four-dimensional databases are 17x17x17x17 matrices.

10. The method recited in claim 6 wherein step e is accomplished by separately performing a nonlinear interpolation on both arrays of measurement data.

11. The method of claim 1 in which a first set of digital information defining a color image corrected for a first imaging system is translated into a second set of digital information for a second imaging system, for the purpose of generating an image on the second imaging system which approximates the color characteristics of an image generated on the first imaging system.

12. The method of claim 1 wherein said second look-up table is provided on a floppy disk and said floppy disk is entered into said computer which drives said first imaging system.

13. The method of claim 1 wherein said second look-up table is a look-up table relating the spectral photometric properties of a second media substantially of the same construction as said first media to the spectral photometric properties of said third imaging system, the spectral photometric properties of said first and second media being different.